# EUROPEAN PATENT SPECIFICATION

(11) **EP 2 033 847 B1**
(45) Date of publication and mention of the grant of the patent: **24.03.2010**
(21) Application number: 07115923.0
(22) Date of filing: 07.09.2007
(51) Int. Cl.: B60R 13/02, B60R 22/18

(54) **Safety belt holder**
Sicherheitsgurthalter
Support de ceinture de sécurité

(43) Date of publication of application: 11.03.2009
(73) Proprietor: Ford Global Technologies, LLC, Dearborn, MI 48126 (US)
(72) Inventor: Masic, Malte Sr., SE-424 91 Olofstorp (SE)
(74) Representative: Valea AB

(56) References cited:
- DE-A1- 10 231 824
- FR-A- 2 701 906
- US-A- 4 817 754
- US-A1- 2003 173 767
- US-A1- 2003 222 451

## Description

### TECHNICAL FIELD

The present invention concerns a vehicle interior panel arranged with a safety belt holder, more specifically an interior panel for a car arranged with seat belt holder, and a vehicle arranged with the interior panel.

### BACKGROUND OF THE INVENTION

The increasing need for large luggage compartments and vehicles which can transport many passengers has accelerated the development of vehicles. Vehicles with foldable seats arranged in the luggage compartment are one solution to the problem. Usually such vehicles have a small storage space under the luggage compartment in which the foldable seat can be stored when not in use. Such vehicles however tend to have problems with safety belts and especially seat belts. On the one hand, the seat belts need to be arranged to be operative when the foldable seat is in its unfolded state. One the other hand, the seat belts need to be able to be placed so as not to obstruct any loading of luggage when not in use. In the patent publication of generic US 6,971,677 B2 a seat belt holder is used for holding the seat belt in the quarter pillar portion of a vehicle when the seat belt is not in use. The seat belt holder permits for the seat belt to be tucked away and thereby free space which otherwise would be obstructed by the seat belt. Usually seat belts have a first anchor point arranged behind an interior panel in the vehicle, such as in the US 6,971,677 B2 document. A seat belt retraction box is usually arranged at the first anchor point. The belt then extends to a belt pivot point by which the belt pivots in another direction, such belt pivot point normally being arranged in the proximity where the shoulder area on an average sized passenger would be. The belt then usually extends to a second anchor point arranged on the floor of the vehicle. Between the second anchor point and the belt pivot point it is common to place a through tongue, which during use is intended to lock to a belt locking device and thereby create a three-point seat belt arrangement.

In recent years it has almost become standard to equip new station wagons, Sports Utility Vehicles (SUV) and vans which all have exposed luggage compartments, with retractable luggage compartment covers. Retractable luggage compartment covers bring additional value to the owner of the vehicle by providing a preventive theft arrangement. The arrangement minimizes the visibility into the luggage compartment from the outside of the vehicle. It may also function as a sun screen to cover sensitive items, such as food groceries. When not needed, the retractable luggage compartment cover can easily be retracted into its retractable luggage compartment cover box, leaving the luggage compartment exposed and ready to load.

When using retractable luggage compartment covers in vehicles having foldable seats in the luggage compartment, the seat belts for the foldable seats obstruct the retractable luggage compartment cover when it is being extended and when it is in its extended state. This problem becomes extra prominent for that part of a seat belt which extends between the belt pivot point and the second anchor point, as described above. The obstructing seat belt can create a gap between the retractable luggage compartment cover and the interior side panel, making a large part of the luggage compartment visible from the outside of the vehicle. The retractable luggage compartment cover then loses its purpose and function as theft preventive means.

A solution to this problem is currently on the market. A seat belt holder is attached to the surface of an interior side panel in the vehicle. The seat belt holder comprises a fastening part by which the holder may be fastened by e.g. screws to the interior side panel. Additionally it comprises a hook like configuration attached to the fastening part in which a part of the seat belt is intended to be inserted. The described solution provides for not just one additional manufacturing step, but at least two, since it is common to have at least two foldable seats in such luggage compartments. In addition, it requires administration and logistics to provide for all the components involved for such a seat belt holder.

### SUMMARY OF THE INVENTION

It is an object of the present invention to at least partly solve the above mentioned problems. The mentioned problems are at least partly solved by a safety belt holder, the safety belt holder being an open ended slot at least partly formed by a vehicle interior panel. The present invention provides for an effective way of manufacturing a seat belt holder which will be attached to the vehicle simultaneously with the interior panel.
The interior panel is preferably adapted to be arranged in the luggage compartment of a vehicle. The interior panel comprises at least a first and a second opposing side wherein the open ended slot is arranged in the vicinity of one of said at least two opposing sides. The open ended slot comprises a first and a second side opening to properly hold the safety belt. The first and second side openings can be straight openings, curved openings, wave shaped opening or combinations thereof. Other forms are of course also possible. In an embodiment of the present invention, the open ended slot is formed by a continuous slit in said interior panel. This embodiment is easy and cheap to manufacture, while at the same provide for a discrete open ended slot since the continuous slit can be made relatively small.

The interior panel may as mentioned exhibit a plurality of different forms. In an embodiment of the present invention the interior panel comprises a first and a second transverse side and a first and a second longitudinal side. Additionally the first and second side opening of the open ended slot may be a first and second longitudinal slit connected by an insertion opening. The first and second longitudinal slit may be arranged with different lengths, this will compensate for the inclining the safety belt may get after insertion into the open ended slot. In one embedment, the first longitudinal slit is longer than said second longitudinal slit. By providing the difference in length and by adapting the length of the first and second side opening of the open ended slot, the safety belt can be prevented from having long term deformation. Such deformations are known to occur with safety belts when these are left in folded or deformed positions.

Additionally, when the interior panel is arranged in a luggage compartment in working cooperation with a retractable luggage compartment cover, the interior panel has a retractable luggage compartment cover extension direction. The retractable luggage compartment cover extension direction sets the direction along which a retractable luggage compartment cover is intended to extend. The open ended slot to temporarily displace and hold the safety belt is then preferably arranged at a point along the retractable luggage compartment cover extension direction so that the open ended slot crosses the retractable luggage compartment cover extension direction. This permits for the retractable luggage compartment cover to be extended uninterrupted by the safety belt, as well as being in the extended state without being influenced by the safety belt.

In one embodiment of the present invention, the interior panel is arranged to at least partly hold a retractable luggage compartment cover. The interior panel is in this embodiment adapted to receive and to hold a retractable luggage compartment cover in its extended state, i.e. it comprises means to hold a retractable luggage compartment cover. Optionally, the interior panel can be arranged with means to at least partly hold a retractable luggage compartment cover box. The open ended slot preferably intersects a straight line between the means to at least partly hold a retractable luggage compartment cover and the means to at least partly hold a retractable luggage compartment cover box.

The interior panel, in either of these embodiments of the present invention, minimise the risk of displacement of the retractable luggage compartment cover from any intended extension direction, as such a displacement could reduce the functionality of the present invention.

The inventors have found that it is advantageous to use the interior panel's already existing bends and folds. Therefore, in an embodiment of the present invention, the interior panel comprises a first and a second outer surface separated by a bend. The first surface and the second surface are arranged at an angle α with respect to each other. For simplicity, when certain surfaces comprise a curvature, the angle α can be calculated from a tangential line to the open ended slot. The open ended slot then extends from the first outer surface, across the bend, to said second outer surface. The embodiment has the advantage of providing a user friendly open ended slot, wherein a safety belt can easily be inserted and retained. It has also been shown that such an embodiment provides a strong open ended slot, which is durable to external forces. Such a property is very useful in luggage compartments since the interior panels of a luggage compartment are often exposed to impact forces from luggage. The first and a second surface are preferably arranged at an angle α between 60-120° with respect to each other. The angle will ensure a certain durability of the open ended slot, when conventional materials are used for the interior panel.

The interior panel is in an embodiment of the present invention an interior side panel, however, the present invention can be utilized on any kind of interior panel such as a conventional A, B, C, D or C/D panel, conventionally used in vehicles. Generally an A panel is used in the primary pillar portion, a B panel in the secondary pillar portion, a C panel in the tertiary pillar portion and a D panel in the quarter pillar portion. A C/D panel is a merge between a tertiary pillar portion and a quarter pillar portion, which are usual in station wagons/saloon cars. Additionally the present invention can be utilized on other kinds of interior panel such as air inlet or outlet panels, speaker panels, roof panels, etc.

The open ended slot, according to the present invention, can be formed by one single interior panel. This is advantageous from a manufacturing perspective although sometimes the design of a car do not allow for this. The open ended slot, according to the present invention, may then be formed by at least two interior panels. Such an embodiment of the present invention will comprise a first interior panel arranged to be in working cooperation with a second interior panel. The second interior panel then form the open ended slot to temporarily displace and hold the safety belt together with the first interior panel.

In an embodiment of the present invention, the open ended slot is formed by a continuous slit in the interior panel. This is a very simple way of manufacturing an open ended slot. Additionally, the continuous slit may be in the form a first and a second substantially longitudinal slit, connected by an insertion opening. Preferably such first and a second substantially longitudinal slit are equally long, or longer, than the width of the safety belt.

The open ended slot can in an alternative embodiment of the present invention be in the form of a cavity comprising a flange. Such a flange is preferably as equally long as the width of the safety belt.

The safety belt is preferably a seat belt, used in preferably a car; however any kind of safety belt can be utilized with the present invention.

The present invention also concerns a vehicle comprising an interior panel according to any of the claims 1-18. More particularly it concerns a vehicle comprising at least one attachable vehicle interior panel and at least one safety belt. The interior panel is arranged with a safety belt holder to temporarily displace and hold a safety belt when the safety belt is not in use. The safety belt holder comprises an open ended slot at least partly formed by the vehicle interior panel. The user of the vehicle can easily displace a part of the safety belt when not needed. The interior panel is preferably arranged in the luggage compartment of a vehicle. The vehicle can additionally comprise a retractable luggage compartment cover which can be extended without influence from the safety belt when the safety belt is temporarily displaced and held in the open ended slot. The compartment preferably comprises at least one foldable passenger seat and the safety belt is preferably a seat belt.

In an embodiment of the present invention, the safety belt comprises a first anchor point, a second anchor point and a safety belt retraction device. The safety belt is imparted with a tension from the safety belt retraction device between the first and second anchor points and the safety belt is held in place in the open ended slot by means of the imparted tension when the safety belt is temporarily displaced and held in the open ended slot.

The vehicle can be any vehicle such as a boat, a bus, a truck or a car; however it is preferably a car and preferably a SUV.

### DEFINITIONS

By the term "safety belt" is meant any kind of belt which may be used in a vehicle for safety reasons e.g. seat belts for passengers, loading belt for securing cargo, etc.

### BRIEF DESCRIPTION OF THE DRAWINGS

The invention will be described in the following by way of example only and with reference to the attached drawings in which
Figure 1a-1b shows a schematic picture of a vehicle with a luggage compartment;
Figure 2 shows an interior side panel with an open ended slot, according to the present invention, before use;
Figure 3 shows an interior side panel with an open ended slot, according to the present invention, during use;
Figure 4 shows an interior side panel with an open ended slot, according to the present invention, during use together with a retractable luggage compartment cover, and
Figure 5 shows a cross section of the interior side panel in figure 4.

### DETAILED DESCRIPTION OF PREFERRED EMBODIMENTS

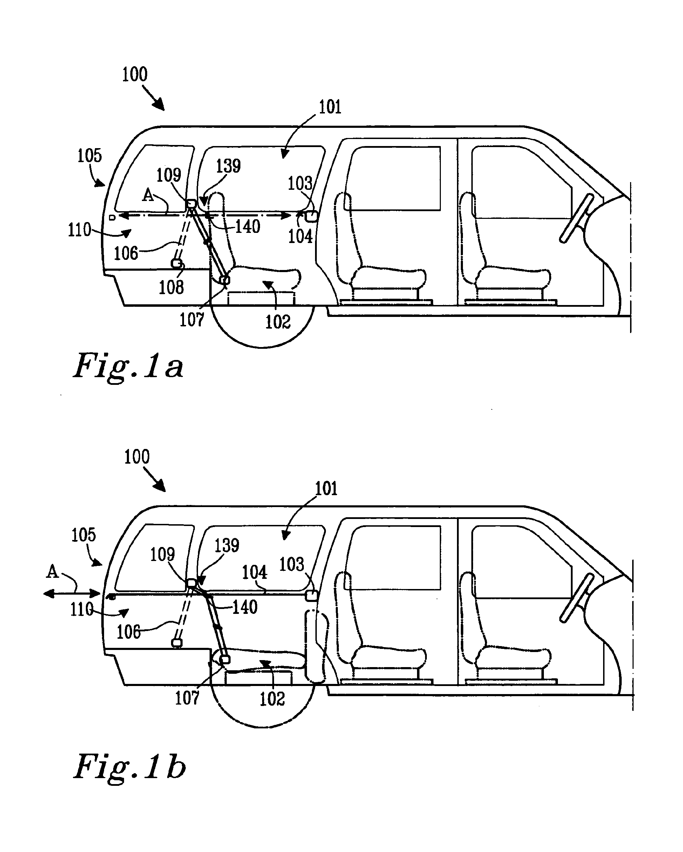

Figure 1a-1b shows a part of a vehicle 100 having a luggage compartment 101 arranged with at least one foldable passenger seat 102. The luggage compartment 101 additionally comprises a retractable luggage compartment cover box 103 comprising a retractable luggage compartment cover 104, which can be extended along an extension direction A and retracted along the opposite direction. The retractable luggage compartment cover 104 can, in its extended state, be attached to a part of an interior side panel 110 in the proximity of the luggage hatch 105 of the vehicle 100 so as to cover the luggage compartment 101. The visibility of the luggage compartment is thereby effectively reduced from the outside of the vehicle. Opposing interior side panels (not shown) provides attachment on opposing sides of the vehicle for the retractable luggage compartment cover 104 when extended. A seat belt 106 is arranged in the proximity of the passenger seat 102. The seat belt 106 has a first anchor point 107, a second anchor point 108 and a belt pivot point 109 arranged between the first and second anchor points 107, 108.

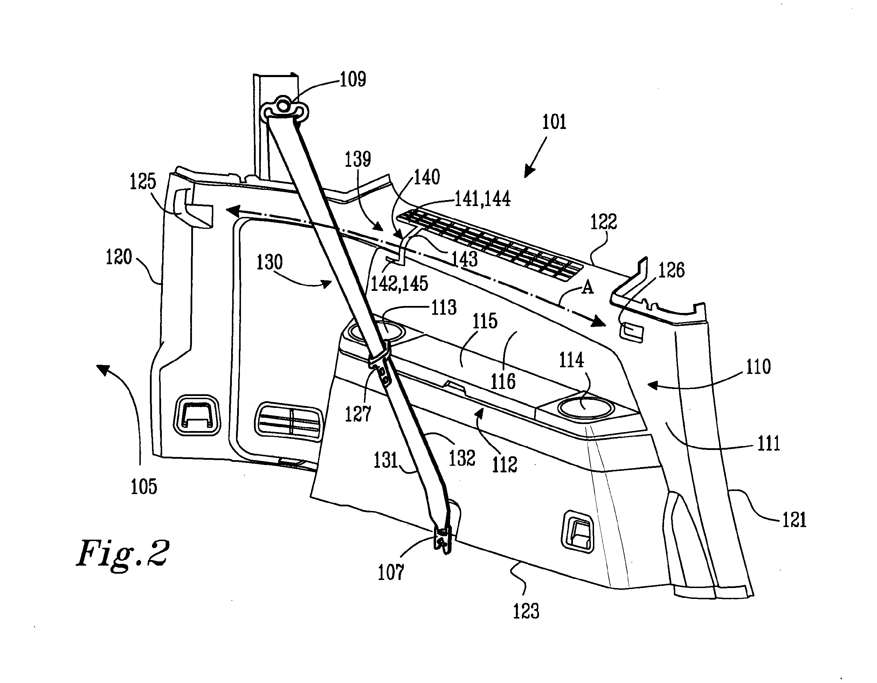

A part of the luggage compartment 101 and the interior side panel 110 is shown in greater detail in figure 2. The interior side panel 110 is, for sake of simplicity, illustrated without parts of the vehicle present. Basically the interior side panel 110 comprises a form moulded base panel 111 onto which a plurality of parts have been assembled. For instance, the base panel 111 forms a part of a side panel glove box 112 arranged between two cup holders 113, 114. A lid 115 to the glove box 112 may be pivotally attached to the base panel 111. Additionally, the base panel 111 comprises interior decor 116 in the form of artificial leather.

The interior side panel 110 comprises a first and a second transverse side 120, 121 and a first and a second longitudinal side 122, 123. Generally an interior panel, according to the present invention does not need to have a rectangular form. The interior panel may be in the form of a square, a triangular, an oval, a circle, or any other form. In all cases an interior panel according to the present invention can be said to have at least a first and a second opposing side. After assembly, the first transverse side 120 of the interior side panel is arranged towards the luggage hatch 105 of the vehicle 100, while the second transverse side 121 faces towards the front of the vehicle. The first longitudinal side 122 is intended to face the roof of the vehicle 100 and the second longitudinal side 123 is intended to face the floor of the vehicle 100, after normal assembly.

A first cavity 125 for attaching the luggage compartment cover 104 in its extended state is arranged in the proximity of the intersection between the first transverse side 120 and the first longitudinal side 122 of the interior side panel 110. A second cavity 126 for attaching the retractable luggage compartment cover box 103 is arranged in the proximity of the intersection between the second transverse side 121 and the first longitudinal side 122 of the interior side panel 110. A virtual extension direction A is formed between the first and the second cavity 125, 126. The extension direction A is the intended (or actual during use) direction along which the retractable luggage compartment cover 104 extends. In the shown embodiment of the present invention, the extension direction A will form a straight line between the first and the second cavity 125, 126.

The seat belt 106 stretches between the first anchor point 107, a second anchor point 108 (shown in figure 1) and a belt pivot point 109 arranged between the first and second anchor points 107, 108. The first anchor point 107 is arranged in the proximity of the centre of the second longitudinal side 123 of the interior side panel 110, close to the vehicles 100 floor. The second anchor point 108 is arranged in the proximity of the first transverse side 120, and in the proximity of the second longitudinal side 123, of the interior side panel 110. The belt pivot point 109 is arranged above the first longitudinal side 122 of the interior side panel 110, in the shoulder area of a presumed passenger. A seat belt coupling device, i.e. a through tongue 127, is arranged between the belt pivot point 109 and the first anchor point 107. Moreover, the belt part between the belt pivot point 109 and the first anchor point 107 forms a belt coupling part 130, having a first and a second longitudinal side 131, 132. The first longitudinal side 131 of the belt coupling part 130 is arranged towards the luggage hatch 105 of the vehicle 100, while the second longitudinal side 132 faces towards the front of the vehicle. The belt coupling part 130 is during use intended to stretch across a passenger and, together with the first anchor point 107 and the belt pivot point 109, form a three-point belt coupling. The belt coupling part 130 will be kept under tension by means of seat belt retraction device (not shown) arranged at the second anchor point 108. Such seat belt retraction device is conventional and will not be described further.

As is shown in figure 2, the seat belt coupling part 130 crosses the extension direction A along which the retractable luggage compartment cover 104 will extend. In practise this will not only cause difficulties when extending the luggage compartment cover 104, as the seat belt coupling part 130 may be caught in the luggage compartment cover 104, but also after extension of the luggage compartment cover 104, since the belt coupling part 130 will slightly displace the luggage compartment cover 104. Displacement of the luggage compartment cover 104 may as mentioned earlier render the luggage compartment 101 visible from the outside of the vehicle.

In accordance with the present invention, a vehicle interior panel 110 for attachment to the interior of a vehicle is arranged with a safety belt holder 139 for temporarily displace and hold a safety belt 106 when the safety belt 106 is not in use. The safety belt holder 139 is an open ended slot 140 at least partly formed by the vehicle interior panel 110. The open ended slot 140 for temporarily displace, and hold, the safety belt 106 is arranged in the proximity of the first longitudinal side 122. The open ended slot 140 comprises a first and a second side opening 144, 145 connected by an insertion opening 143. The first and second side opening 144, 145 is, in this embodiment of the present invention, in the form of a first and a second longitudinal slit 141, 142 which extend substantially parallel with the first and the second longitudinal side 122, 123 of the interior side panel 110. The insertion opening 143 is formed between the first and second longitudinal slits 141, 142 of the open ended slot 140. The first and second longitudinal slits 141, 142 and the insertion opening 143 are formed by a continuous slit in the interior side panel. The first and the second longitudinal slits 141, 142 can be equally long, but in the shown embodiment of the present invention, the first longitudinal slit 141 of the open ended slot 140 is slightly longer than the second longitudinal slit 142 of the open ended slot 140, so as to compensate for the inclination of the seat belt coupling part 130. In the shown embodiment of the present invention the first and second longitudinal slit 141, 142 are longer than the distance between the first and the second longitudinal side 131, 132 of the belt coupling part 130, i.e. the width of the seat belt 106.

The first longitudinal slit 141 is arranged closer to the first longitudinal side 122 of the interior side panel 110, while the second longitudinal slit 142 is arranged closer to the second longitudinal side 123 of the interior side panel 110. The extension direction A extends substantially between the first and the second longitudinal slits 141, 142, so as to cross the insertion opening 143.

In the shown embodiment of the present invention, the open ended slot 140 has been illustrated as a first and second longitudinal slit 141, 142 with an insertion opening 143. It is however within the boundaries of the present invention that the first and second opening 144, 145 can instead of a first and second longitudinal slit, comprise diagonal slits, curved slits, wave shaped slits, or combinations of the mentioned slits. It is to be noted that two straight slits forming e.g. an arrow, create an insertion opening at the point of such arrow.

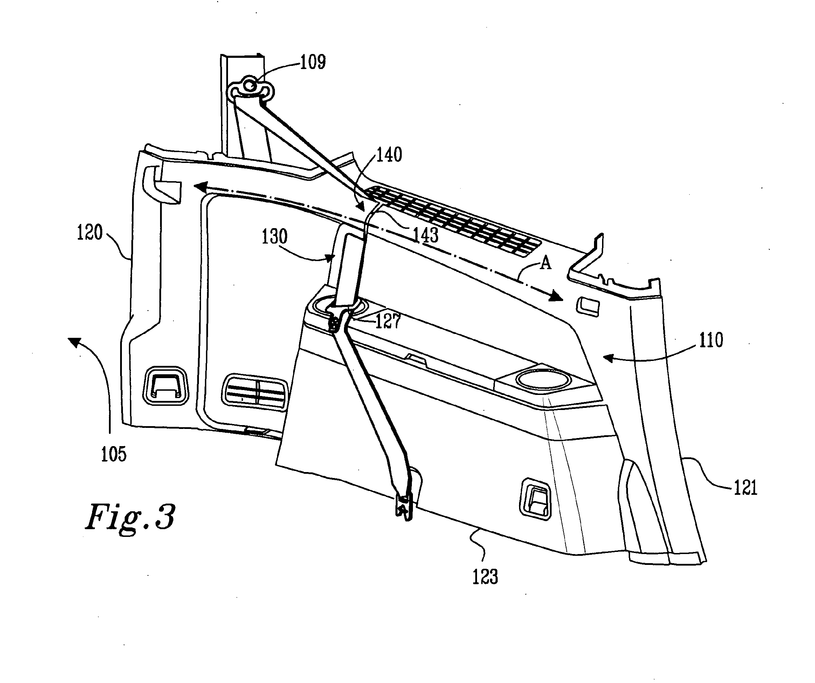

Turning to figure 3, figure 3 shows the interior side panel 110 as shown in figure 2 but with the seat belt coupling part 130 of the seat belt 106 partly arranged in the open ended slot 140. The seat belt coupling part 130 has been inserted through the insertion opening 143 of the open ended slot 140 without releasing the seat belt 106 from the first and second anchor points 107, 108. The seat belt retraction device (not shown) keeps the seat belt 106 under tension, i.e. a retraction force, so that the seat belt 106 is kept readily in place in the open ended slot 140.

The insertion opening 143 is, in the shown embodiment of the present invention, arranged towards the second transverse side 121 of the interior side panel 110, and thereby the front of the vehicle 100. This will allow for any user to reach for the belt coupling part 130 and the belt coupling device 127, pull the belt coupling part 130 out from the open ended slot 140, and with one continuous motion fasten the belt coupling device 127 to an appropriate locking device.

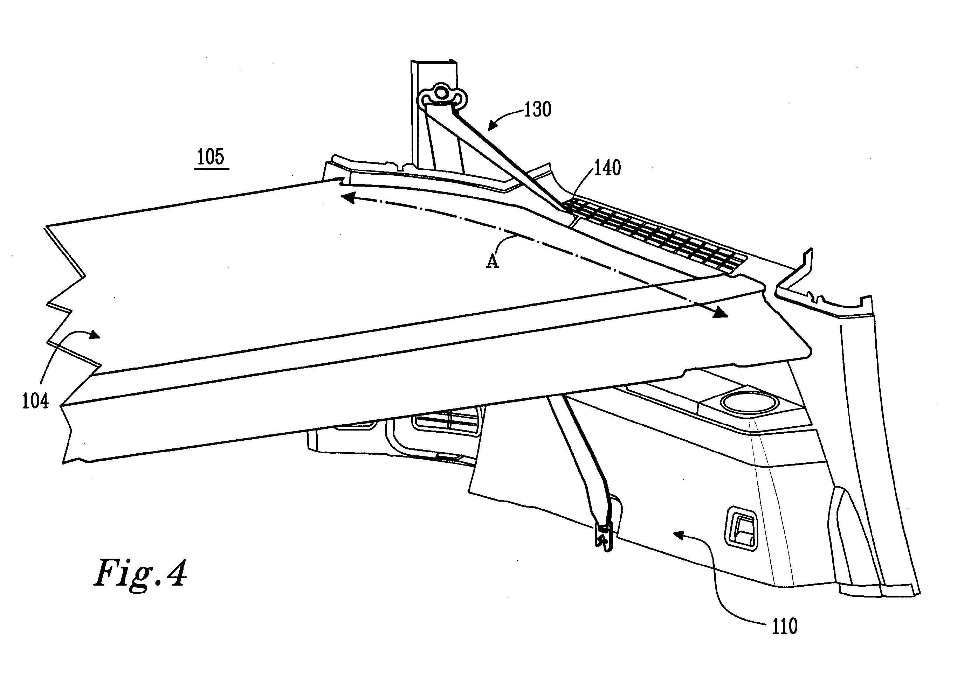

Further in figure 4, the luggage compartment cover 104 is illustrated when extended all the way to the rear of the vehicle 100 and the luggage hatch 105. The belt coupling part 130 of the seat belt 106 is securely displaced and held by the open ended slot 140 arranged in the interior side panel 110, permitting the luggage compartment cover 104 to extend uninterrupted along extension direction A.

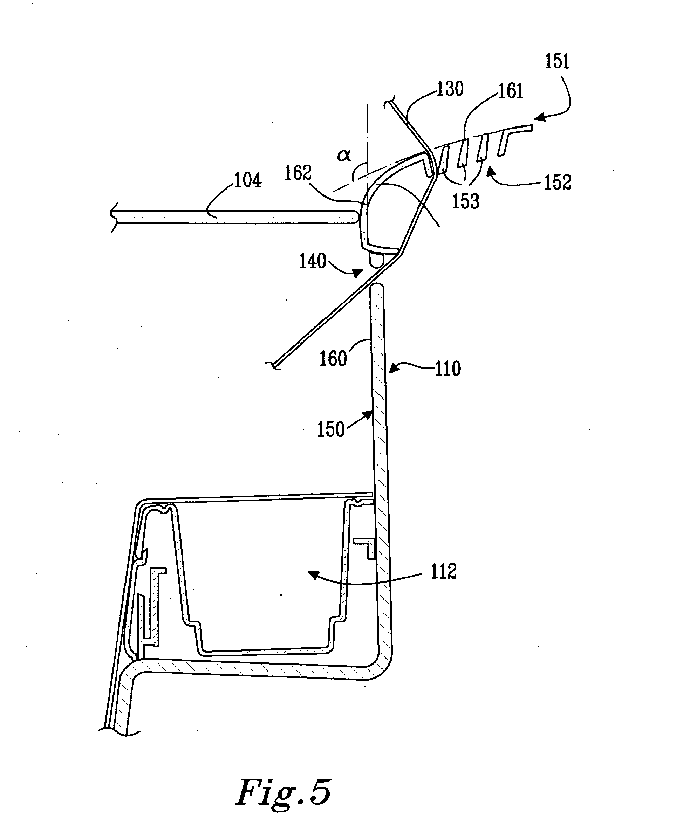

Figure 5 shows a cross section of a part of figure 4. The belt coupling part 130 is arranged in the open ended slot 140, while the luggage compartment cover 104 extends past the belt coupling part 130 uninterrupted, allowing the luggage compartment cover 104 to extend all the way to the interior side panel 110. As can be seen, the interior side panel 110 comprises several different bends and folds, each with a specific purpose. As an example, and as explained earlier, the interior side panel 110 forms part of a side panel glove box 112. These different bends and folds, which can be said to render different surfaces on the interior side panel 110, have effectively been used by the inventors to improve the functionality of the present invention. After assembly in a vehicle 100, the interior side panel 110 comprises a substantially vertical side 150 which, in the proximity of the second longitudinal side 122, transcends into a substantially horizontal side 151.

The substantially horizontal side 151 runs substantially parallel with the second longitudinal side 122 of the interior side panel 110. An air outlet 152 which, after assembly in the vehicle, 100 is in communication with an air conditioning system of the vehicle 100, is arranged in the substantially horizontal side 151. The air outlet 152 comprises a grid in the form of a plurality of vanes 153 which extends across the air outlet 152. In the shown embodiment of the present invention, the open ended slot 140 is at least partly arranged in the air outlet 152.

After assembly in a vehicle 100, the interior panel 110 comprises an inner and an outer side 154, 155. The outer side 154 faces the luggage compartment, while the inner side 155 faces the vehicle body. The substantially vertical side 150 and the substantially horizontal side 151 can be said to form a first and a second outer surface 160, 161 separated by a curvature, such as a bend 162. The first and the second outer surfaces 160, 161 are via the bend 162 arranged at an angle α with respect to each other. The open ended slot 140, which in this embodiment comprises a continuous slit, extends from the outer side 154 and the first outer surface 160, into the inner side 155 and across the bend 162, and out to the outer side 154 at the second outer surface 161. In the shown embodiment of the present invention, the angle α is approximately 100°, however in other embodiments the angle α may very well be from about 60 to about 140°. The bend 162 provides for an open ended slot 140 which is user friendly in terms of putting the belt coupling part 130 into the open ended slot 140. Although in this embodiment of the present invention, the seat belt extends through the wall of the interior side panel 110 from the outer side 154 to the inner side 155 and back to the outer side 154, the present invention is not limited to this feature. It may very well be that an open ended slot, according to the present invention, comprises a protective wall which closes the open ended slot 140 towards the inner side 155 of the interior panel. Such protective wall is in such embodiments also preferably formed by the interior panel 110.

As described above, the open ended slot 140 may be arranged in the interior side panel 110 as a continuous slit which has been formed during the form moulding of the interior side panel, although such a slit may also be provided in the interior side panel after manufacturing by e.g. cutting or sawing. As illustrated in figure 5, the open ended slot 140 stretches all the way through the interior side panel 110; it is however within the boundaries of the present invention that an open ended slot may be formed as a cavity with a protruding flange in the interior side panel. The open ended slot is then formed between the cavity and the flange. In such an embodiment of the present invention, the risk of getting dirt or any other outside rubbish through the open ended slot 140 will be eliminated, while at the same time, it provides for a simple and simultaneous manufacturing of an interior panel and a safety belt holder. It also provides for a simultaneous assembly of a seat belt holder and an interior panel to a vehicle.

## Claims

1. A vehicle interior panel (110) for attachment to the interior of a vehicle (100), said interior panel (110) being arranged with a safety belt holder (139) to temporarily displace and hold a safety belt (106) when said safety belt (106) is not in use,
**characterized in**
**that** said safety belt holder (139) is an open ended slot (140) at least partly formed by said vehicle interior panel (110).

2. The vehicle interior panel according to claim 1, **characterized in that** said interior panel (110) comprises at least a first and a second opposing side (120, 121, 122, 123), wherein said open ended slot (140) is arranged in the vicinity of one of said at least two opposing sides (120, 121, 122, 123).

3. The vehicle interior panel according to claim 1 or 2, **characterized in that** said open ended slot (140) comprises a first and a second side opening (144, 145) wherein said first and second side openings (144, 145) are straight openings, curved openings, wave shaped opening or combinations thereof.

4. The vehicle interior panel according to any preceding claim, **characterized in that** said open ended slot (110) is formed by a continuous slit in said interior panel (110).

5. The vehicle interior panel according to claim 4, **characterized in that** said interior panel comprises a first and a second transverse side (120, 121) and a first and a second longitudinal side (122, 123), and **in that** said first and a second side opening (144, 145) is a first and second longitudinal slit (141, 142) connected by an insertion opening (143).

6. The vehicle interior panel according to claim 5, **characterized in that** said first longitudinal slit (141) has a different length than said second longitudinal slit (142).

7. The vehicle interior panel according to claim 6, **characterized in that** said first longitudinal slit (141) is longer than said second longitudinal slit (142).

8. The vehicle interior panel according to any preceding claim, **characterized in that** said interior panel (110) comprises a first and a second outer surface (160, 161) separated by a bend (162), wherein said first outer surface (160) and said second outer surface (161) are arranged at an angle α with respect to each other, and **in that** said open ended slot (140) to temporarily displace and hold said safety belt (106) extends from said first outer surface (160), across said bend, to said outer second surface (161).

9. The vehicle interior panel according to claim 8, **characterized in that** said first and a second outer surface (160, 161) are arranged at an angle a between 60-120° with respect to each other.

10. The vehicle interior panel according to any preceding claim, **characterized in that** said open ended slot (140) is a cavity comprising a flange

11. The vehicle interior panel according to any preceding claim, **characterized in that** said interior panel (110) is arranged with means (125) to at least partly hold a retractable luggage compartment cover (104).

12. The vehicle interior panel according to any preceding claim, **characterized in that** said interior panel (110) is arranged with means (126) to at least partly hold a retractable luggage compartment cover box (103).

13. The vehicle interior panel according to claim 11 and 12, **characterized in that** said open ended slot intersects a straight line between said means to at least partly hold a retractable luggage compartment cover (104) and said means to at least partly hold a retractable luggage compartment cover box (103).

14. The vehicle interior panel according to any preceding claim, **characterized in that** said interior panel (110) is an interior side panel.

15. The vehicle interior panel according to any of claims 1 to 13, **characterized in that** said interior panel (110) is a A, B, C, D or C/D panel.

16. The vehicle interior panel according to any preceding claim, **characterized in that** said open ended slot (140) is formed by one single interior panel (110).

17. The vehicle interior panel according to any preceding claim, **characterized in that** said safety belt (106) is a seat belt (106).

18. The vehicle interior panel according to any preceding claim, **characterized in that** said interior panel (110) is a first interior panel arranged to be in working cooperation with a second interior panel, wherein said second interior panel form the open ended slot for temporarily displace and hold said safety belt together with said first interior panel.

19. A vehicle (100) comprising at least one vehicle interior panel (110) according to any of the claims 1 - 18.

20. The vehicle according to claim 19, **characterized in that** said vehicle (100) comprises a luggage compartment (101) and **in that** said interior panel (110) is arranged in said luggage compartment (101).

21. The vehicle according to claim 20, **characterized in that** said vehicle (100) additionally comprises a retractable luggage compartment cover (104) having an extension and retraction direction (A), wherein said open ended slot is arranged to intersect said extension and retraction direction (A).

22. The vehicle according to any of the claims 19 to 21, **characterized in that** said luggage compartment (101) comprises at least one foldable passengers seat and that said safety belt (106) is a seat belt (106).

23. The vehicle according to any of claims 19 to 22, **characterized in that** said safety belt (106) comprises a first anchor point (107), a second anchor point (108) and a safety belt retraction device, said safety belt (106) is imparted with a retraction force from said safety belt retraction device, wherein said safety belt (106) is additionally held in place in said open ended slot (140) by means of said imparted retraction force when said safety belt (106) is temporarily displaced and held in said open ended slot (140).

24. The vehicle according to any of claims 19 to 23, **characterized in that** said vehicle (100) is a car (100), preferably an SUV.

## Patentansprüche

1. Eine Fahrzeug-Innenraumverkleidung (110) zur Anbringung im Innenraum eines Fahrzeugs (100), wobei die Innenraumverkleidung (110) mit einem Sicherheitsgurthalter (139) versehen ist, der einen Sicherheitsgurt (106) zeitweise verlagern und halten kann, wenn der Sicherheitsgurt (106) nicht in Gebrauch ist, **dadurch gekennzeichnet, dass** der Sicherheitsgurthalter (139) ein Schlitz (140) mit offenem Ende ist, welcher zumindest teilweise von der Fahrzeug-Innenraumverkleidung (110) gebildet wird.

2. Fahrzeug-Innenraumverkleidung nach Anspruch 1, **dadurch gekennzeichnet, dass** die Innenraumverkleidung (110) mindestens eine erste und eine zweite gegenüberliegende Seite (120, 121, 122, 123) umfasst, wobei der Schlitz (140) mit offenem Ende in der Nähe von einer der mindestens zwei gegenüberliegenden Seiten (120, 121, 122, 123) angeordnet ist.

3. Fahrzeug-Innenraumverkleidung nach Anspruch 1 oder 2, **dadurch gekennzeichnet, dass** der Schlitz (140) mit offenem Ende eine erste und eine zweite seitliche Öffnung (144, 145) umfasst, wobei die erste und zweite seitliche Öffnung (144, 145) gerade Öffnungen, gebogene Öffnungen, wellenförmige Öffnungen oder Kombinationen davon sind.

4. Fahrzeug-Innenraumverkleidung nach einem der vorhergehenden Ansprüche, **dadurch gekennzeichnet, dass** der Schlitz (140) mit offenem Ende durch einen durchgehenden Spalt in der Innenraumverkleidung (110) gebildet wird.

5. Fahrzeug-Innenraumverkleidung nach Anspruch 4, **dadurch gekennzeichnet, dass** die Innenraumverkleidung eine erste und eine zweite querverlaufende Seite (120, 121) und eine erste und eine zweite längsverlaufende Seite (122, 123) umfasst, und dass die erste und eine zweite seitliche Öffnung (144, 145) ein erster und zweiter längsverlaufender Spalt (141, 142) sind, die durch eine Einführöffnung (143) verbunden sind.

6. Fahrzeug-Innenraumverkleidung nach Anspruch 5, **dadurch gekennzeichnet, dass** der erste längsverlaufende Spalt (141) eine andere Länge als der zweite längsverlaufende Spalt (142) aufweist.

7. Fahrzeug-Innenraumverkleidung nach Anspruch 6, **dadurch gekennzeichnet, dass** der erste längsverlaufende Spalt (141) länger als der zweite längsverlaufende Spalt (142) ist.

8. Fahrzeug-Innenraumverkleidung nach einem der vorhergehenden Ansprüche, **dadurch gekennzeichnet, dass** die Innenraumverkleidung (110) eine erste und eine zweite äußere Oberfläche (160, 161) umfasst, die durch eine Biegung (162) getrennt sind, wobei die erste äußere Oberfläche (160) und die zweite äußere Oberfläche (161) in einem Winkel α zueinander angeordnet sind, und **dadurch**, dass sich der Schlitz (140) mit offenem Ende, der den Sicherheitsgurt (106) zeitweise verlagern und halten kann, von der ersten äußeren Oberfläche (160) - über die Biegung - zu der zweiten äußeren Oberfläche (161) erstreckt.

9. Fahrzeug-Innenraumverkleidung nach Anspruch 8, **dadurch gekennzeichnet, dass** die erste und eine zweite äußere Oberfläche (160, 161) in einem Winkel α zueinander angeordnet sind, der zwischen 60° und 120° beträgt.

10. Fahrzeug-Innenraumverkleidung nach einem der vorhergehenden Ansprüche, **dadurch gekennzeichnet, dass** der Schlitz (140) mit offenem Ende ein Hohlraum ist, der eine Kante umfasst.

11. Fahrzeug-Innenraumverkleidung nach einem der vorhergehenden Ansprüche, **dadurch gekennzeichnet, dass** die Innenraumverkleidung (110) mit Mitteln (125) ausgestattet ist, die das zumindest teilweise Halten einer einfahrbaren Gepäckraumabdeckung (104) ermöglichen.

12. Fahrzeug-Innenraumverkleidung nach einem der vorhergehenden Ansprüche, **dadurch gekennzeichnet, dass** die Innenraumverkleidung (110) mit Mitteln (126) ausgestattet ist, die das zumindest teilweise Halten einer Box (103) für eine einfahrbare Gepäckraumabdeckung ermöglichen.

13. Fahrzeug-Innenraumverkleidung nach den Ansprüchen 11 und 12, **dadurch gekennzeichnet, dass** der Schlitz mit offenem Ende eine gerade Linie zwischen den Mitteln zum zumindest teilweisen Halten einer Box (103) für eine einfahrbare Gepäckraumabdeckung und den Mitteln zum zumindest teilweisen Halten einer einfahrbaren Gepäckraumabdeckung (104) schneidet.

14. Fahrzeug-Innenraumverkleidung nach einem der vorhergehenden Ansprüche, **dadurch gekennzeichnet, dass** die Innenraumverkleidung (110) eine Innenraum-Seitenverkleidung ist.

15. Fahrzeug-Innenraumverkleidung nach einem der Ansprüche 1 bis 13, **dadurch gekennzeichnet, dass** die Innenraumverkleidung (110) eine A-, B-, C-, D- oder C/D-Verkleidung ist.

16. Fahrzeug-Innenraumverkleidung nach einem der vorhergehenden Ansprüche, **dadurch gekennzeichnet, dass** der Schlitz (140) mit offenem Ende durch eine einzige Innenraumverkleidung (110) gebildet wird.

17. Fahrzeug-Innenraumverkleidung nach einem der vorhergehenden Ansprüche, **dadurch gekennzeichnet, dass** der Sicherheitsgurt (106) ein Sitzgurt (106) ist.

18. Fahrzeug-Innenraumverkleidung nach einem der vorhergehenden Ansprüche, **dadurch gekennzeichnet, dass** die Innenraumverkleidung (110) eine erste Innenraumverkleidung ist, die so angelegt ist, dass sie mit einer zweiten Innenraumverkleidung zusammenwirkt, wobei die zweite Innenraumverkleidung gemeinsam mit der ersten Innenraumverkleidung den Schlitz mit offenem Ende bildet, der einen Sicherheitsgurt zeitweise verlagern und halten kann.

19. Ein Fahrzeug (100), das zumindest eine Fahrzeug-Innenraumverkleidung (110) nach einem der Ansprüche 1 bis 18 umfasst.

20. Fahrzeug nach Anspruch 19, **dadurch gekennzeichnet, dass** das Fahrzeug (100) einen Gepäckraum (101) umfasst und dass die Innenraumverkleidung (110) in dem Gepäckraum (101) angeordnet ist.

21. Fahrzeug nach Anspruch 20, **dadurch gekennzeichnet, dass** das Fahrzeug (100) zusätzlich eine einfahrbare Gepäckraumabdeckung (104) umfasst, die eine Richtung (A) zum Ausfahren und Zusammenziehen hat, wobei der Schlitz mit offenem Ende so angeordnet ist, dass er die Richtung (A) zum Ausfahren und Zusammenziehen schneidet.

22. Fahrzeug nach einem der Ansprüche 19 bis 21, **dadurch gekennzeichnet, dass** der Gepäckraum (101) mindestens einen faltbaren Passagiersitz umfasst und dass der Sicherheitsgurt (106) ein Sitzgurt (106) ist.

23. Fahrzeug nach einem der Ansprüche 19 bis 22, **dadurch gekennzeichnet, dass** der Sicherheitsgurt (106) einen ersten Verankerungspunkt (107), einen zweiten Verankerungspunkt (108) und eine Vorrichtung zum Einziehen des Sicherheitsgurtes umfasst, wobei auf den Sicherheitsgurt (106) durch die Vorrichtung zum Einziehen des Sicherheitsgurtes eine Einziehkraft ausgeübt wird, und wobei der Sicherheitsgurt (106) mittels der ausgeübten Einziehkraft zusätzlich in dem Schlitz (140) mit offenem Ende an seinem Platz gehalten wird, wenn der Sicherheitsgurt (106) zeitweilig verlagert und in dem oben offenen Schlitz (140) gehalten wird.

24. Fahrzeug nach einem der Ansprüche 19 bis 23, **dadurch gekennzeichnet, dass** das Fahrzeug (100) ein PKW (100), vorzugsweise ein SUV, ist.

## Revendications

1. Panneau intérieur (110) de véhicule destiné à une fixation à l'intérieur d'un véhicule (100), ledit panneau intérieur (110) étant pourvu d'un support (139) de ceinture de sécurité pour temporairement déplacer et retenir une ceinture de sécurité (106) lorsque ladite ceinture de sécurité (106) n'est pas en usage,
***caractérisé en ce que*** ledit support (139) de ceinture de sécurité est une encoche à extrémité ouverte, formée, au moins en partie, par ledit panneau intérieur (110) du véhicule.

2. Panneau intérieur de véhicule selon la revendication 1, ***caractérisé en ce que*** ledit panneau intérieur (110) comprend au moins une première et une deuxième faces opposées (120, 121, 122, 123), ladite encoche (140) à extrémité ouverte étant ménagée au voisinage de l'une desdites aux moins deux faces opposées (120, 121, 122, 123).

3. Panneau intérieur de véhicule selon la revendication 1 ou 2, ***caractérisé en ce que*** ladite encoche (140) à extrémité ouverte comprend une première et une deuxième ouvertures latérales (144, 145), lesdites première et deuxième ouvertures latérales (144, 145) étant des ouvertures droites, des ouvertures courbes, une ouverture ondulée, ou une combinaison de celles-ci.

4. Panneau intérieur de véhicule selon l'une quelconque des revendications précédentes, ***caractérisé en ce que*** ladite encoche (140) à extrémité ouverte est formée par une fente continue dans ledit panneau intérieur (110).

5. Panneau intérieur de véhicule selon la revendication 4, ***caractérisé en ce que*** ledit panneau intérieur comprend une première et une deuxième faces transversales (120, 121) et une première et une deuxième faces longitudinales (122, 123), et ***en ce que*** ladite première et une deuxième ouvertures latérales (144, 145) sont une première et une deuxième fentes longitudinale (141, 142) reliées par une ouverture d'insertion (143).

6. Panneau intérieur de véhicule selon la revendication 5, ***caractérisé en ce que*** ladite première fente longitudinale (141) a une longueur différente de celle de ladite deuxième fente longitudinale (142).

7. Panneau intérieur de véhicule selon la revendication 6, ***caractérisé en ce que*** ladite première fente longitudinale (141) est plus longue que ladite deuxième fente longitudinale (142).

8. Panneau intérieur de véhicule selon l'une quelconque des revendications précédentes, ***caractérisé en ce que*** ledit panneau intérieur (110) comprend une première et une deuxième surfaces extérieures (160, 161) séparées par une courbe (162), ladite première surface extérieure (160) et ladite deuxième surface extérieure (161) étant disposées l'une par rapport à l'autre selon un angle α, et ***en ce que*** ladite encoche (140) à extrémité ouverte, destinée à temporairement déplacer et retenir ladite ceinture de sécurité (106), s'étend de ladite première surface extérieure (160), traverse ladite courbe, jusqu'à ladite deuxième surface extérieure (161).

9. Panneau intérieur de véhicule selon la revendication 8, ***caractérisé en ce que*** ladite première et une deuxième surfaces extérieures (160, 161) sont disposées l'une par rapport à l'autre selon un angle α compris entre 60 et 120°.

10. Panneau intérieur de véhicule selon l'une quelconque des revendications précédentes, ***caractérisé en ce que*** ladite encoche (140) à extrémité ouverte est une cavité comprenant une bride.

11. Panneau intérieur de véhicule selon l'une quelconque des revendications précédentes, ***caractérisé en ce que*** ledit panneau intérieur (110) comporte des moyens (125) pour retenir au moins en partie un couvre-compartiment à bagages rétractable (104).

12. Panneau intérieur de véhicule selon l'une quelconque des revendications précédentes, ***caractérisé en ce que*** ledit panneau intérieur (110) comporte des moyens (126) pour retenir au moins en partie un boîtier (103) de couvre-compartiment à bagages rétractable.

13. Panneau intérieur de véhicule selon les revendications 11 et 12, ***caractérisé en ce que*** ladite fente à extrémité ouverte intersecte une ligne droite entre lesdits moyens pour retenir au moins en partie un couvre-compartiment à bagages rétractable (104) et lesdits moyens pour retenir en moins en partie un boîtier (103) de couvre-compartiment à bagages rétractable.

14. Panneau intérieur de véhicule selon l'une quelconque des revendications précédentes, ***caractérisé en ce que*** ledit panneau intérieur (110) est un panneau intérieur latéral.

15. Panneau intérieur de véhicule selon l'une quelconque des revendications 1 à 13, ***caractérisé en ce que*** ledit panneau intérieur (110) est un panneau A, B, C, D ou C/D.

16. Panneau intérieur de véhicule selon l'une quelconque des revendications précédentes, ***caractérisé en ce que*** ladite encoche (140) à extrémité ouverte est formée par un unique panneau intérieur (110).

17. Panneau intérieur de véhicule selon l'une quelconque des revendications précédentes, ***caractérisé en ce que*** ladite ceinture de sécurité (106) est une ceinture (106) de siège.

18. Panneau intérieur de véhicule selon l'une quelconque des revendications précédentes, ***caractérisé en ce que*** ledit panneau intérieur (110) est un premier panneau intérieur ménagé pour être en coopération fonctionnelle avec un deuxième panneau intérieur, dans lequel ledit deuxième panneau intérieur forme la fente à extrémité ouverte pour temporairement déplacer et maintenir ladite ceinture de sécurité conjointement avec ledit premier panneau intérieur.

19. Véhicule (100) comprenant au moins un panneau intérieur (110) de véhicule selon l'une quelconque des revendications 1 à 18.

20. Véhicule selon la revendication 19, ***caractérisé en ce que*** ledit véhicule (100) comprend un compartiment (101) à bagages et ***en ce que*** ledit panneau intérieur (110) est situé dans ledit compartiment (101) à bagages.

21. Véhicule selon la revendication 20, ***caractérisé en ce que*** ledit véhicule (100) comprend en plus un couvre-compartiment à bagages rétractable (104) ayant une direction (A) d'extension et de rétraction, dans lequel ladite fente à extrémité ouverte est agencée pour intersecter ladite direction (A) d'extension et de rétraction.

22. Véhicule selon l'une quelconque des revendications 19 à 21, ***caractérisé en ce que*** ledit compartiment (101) à bagages comprend au moins un siège passager repliable et ***en ce que*** ladite ceinture de sécurité (106) est une ceinture (106) de siège.

23. Véhicule selon l'une quelconque des revendications 19 à 22, ***caractérisé en ce que*** ladite ceinture de sécurité (106) comprend un premier point d'ancrage (107), un deuxième point d'ancrage (108) et un dispositif de rappel de la ceinture de sécurité, une force de rappel dudit dispositif de rappel de la ceinture de sécurité est transmise à ladite ceinture de sécurité (106), dans lequel ladite ceinture de sécurité (106) est de plus maintenue en place dans ladite encoche (140) à extrémité ouverte au moyen de ladite force de rappel transmise lorsque ladite ceinture de sécurité (106) est temporairement déplacée et maintenue dans ladite encoche (140) à extrémité ouverte.

24. Véhicule selon l'une quelconque des revendications 19 à 23, ***caractérisé en ce que*** ledit véhicule (100) est une automobile (100), de manière préférée un tout-terrain de loisir (SUV).
